# EUROPEAN PATENT APPLICATION

(11) **EP 3 181 981 A1**
(43) Date of publication of application: **21.06.2017**
(21) Application number: 16159765.3
(22) Date of filing: 11.03.2016
(51) Int. Cl.: F16M 11/04, F16M 13/02, H05K 5/02

(54) **FIXATION STRUCTURE**

(30) Priority: 18.12.2015 TW 104220405
(71) Applicant: Compal Broadband Networks Inc., 114 Taipei City (TW)
(72) Inventor: TSAI, CHIA-CHENG, 300 Hsinchu City (TW); Wu, CHIANG-CHANG, 407 Taichung City (TW); HSU, LIANG-SAN, 247 New Taipei City (TW)
(74) Representative: Lermer, Christoph

(57) **Abstract**

A fixation structure for fixing a casing of a modem includes a carrier base. A bottom of the casing has at least one anchoring member. At least one end of the carrier base has a connection member connected with the anchoring member so as to fix the modem to the carrier base. The connection member has a spring member for buckling a groove at an interior wall of the anchoring member. According to the cable arrangement of the casing, either a positive-angling or a negative-angling installation manner can be applied to fix the casing to the carrier base so as able to locate the modem omnidirectionally.

## Description

This application claims the benefit of Taiwan Patent Application Serial No. 104220405, filed December 18th, 2015, the subject matter of which is incorporated herein by reference.

### BACKGROUND OF INVENTION

### 1. FIELD OF THE INVENTION

The invention relates to a fixation structure, and more particularly to the fixation structure that provides a carrier base to expose fixedly a modem with both the front and the back sides.

### 2. DESCRIPTION OF THE PRIOR ART

A modem is to transform digital signals into analog signals for computers and/or other electronic devices. Conventionally, installations for the modem can be classified into two types.

One of the installations is a desk-top installation, in which the modem is simply placed on a predetermined place so as to receive a foreign cable and to connect another cable to the computer or the electronic device.

Another one of the installations is a wall-fixed installation, in which a fixation structure for anchoring the modem is fixed to a wall.

Currently, the wall-fixed installation is the popular type that most of people adopt to locate the modem. However, the fixation structure using the wall-fixed installation would limit the cables of the modem to one side thereof away the wall. Namely, the fixation structure can only allow the modem to have all the ports for cables to be arranged at one side (say the front side or positive angle) of the modem. Thus, a modem with dual-side or more-than-two-side cabling is unable to apply the wall-fixed installation. Therefore, an improvement for the fixation structure to locate all types of modems is definitely welcome to the art.

### SUMMARY OF THE INVENTION

Accordingly, it is the primary object of the present invention to provide a fixation structure that can fix a casing of a modem to a carrier base at a positive angle or a negative angle according to the cable arrangement of the modem, and thus omnidirectional application upon the modem can be achieved.

In the present invention, applied to fix a casing of a modem, a bottom of the casing further having at least one anchoring member, comprises:

a carrier base, having at least one connection member at at least one corresponding end, the connection member being connected with the anchoring member so as to fixed the modem to the carrier base.

In one embodiment of the present invention, at least one side of the carrier base has a sliding slot located close to the connection member.

In one embodiment of the present invention, the connection member has a spring member and a buckling member, the spring member being located at a top of the connection member, the buckling member being located at one end of the connection member.

In one embodiment of the present invention, an interior wall of the anchoring member has a groove for buckling the spring member.

In one embodiment of the present invention, the spring member has a protrusive semispherical node and the groove is a semispherical groove for matching the protrusive semispherical node.

By providing the fixation structure of the present invention to buckle the spring member and the groove, the fixation of the modem to the carrier base can adopt either a positive-angling manner or a negative-angling manner according to the cable arrangement of the casing, and thus omnidirectional application upon the modem can be achieved.

All these objects are achieved by the fixation structure described below.

### BRIEF DESCRIPTION OF THE DRAWINGS

The present invention will now be specified with reference to its preferred embodiment illustrated in the drawings, in which:
FIG.1 is a schematic perspective view of a fixation structure in accordance with the present invention;
FIG.2 is a schematic perspective view of an engagement of the fixation structure of FIG. 1 and a casing; and
FIG3 illustrates schematically a cross sectional view of FIG2.

### DESCRIPTION OF THE PREFERRED EMBODIMENT

The invention disclosed herein is directed to a fixation structure. In the following description, numerous details are set forth in order to provide a thorough understanding of the present invention. It will be appreciated by one skilled in the art that variations of these specific details are possible while still achieving the results of the present invention. In other instance, well-known components are not described in detail in order not to unnecessarily obscure the present invention.

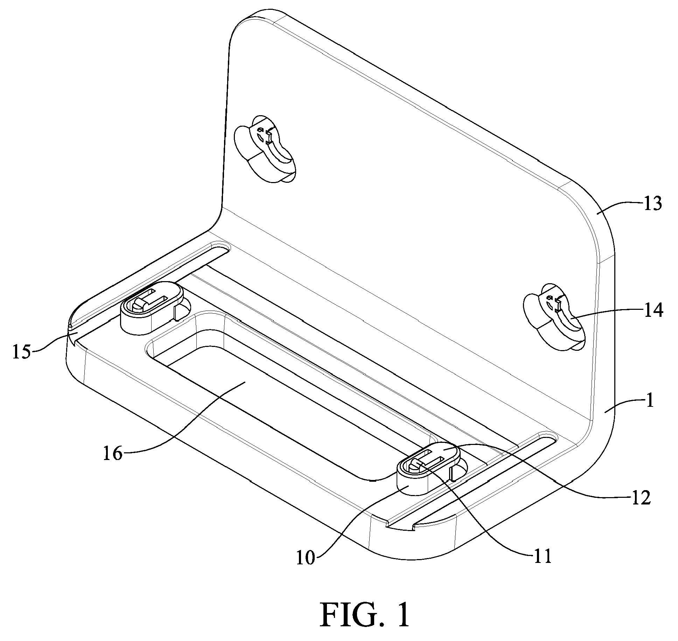

Referring now to FIG.1, a fixation structure of the present invention includes a carrier base 1 and a fixation member 13.

The carrier base 1 has at least one connection member 10 located at one corresponding end of the carrier base 1. As shown, two connection members 10 are included, and the two connection members 10 are located to opposing ends of the carrier base 1. Each of the connection members 10 has a spring member 11 and a buckling member 12. The spring member 11 can be a spring plate, and is located at a top of the carrier base 1. The spring member 11 further has a protrusive semispherical node. The buckling member 12 located at one end of the connection member 10 is extended away the connection member 10.

The carrier base 1 further includes a central empty space 16 and at least one sliding slot 15 (two shown in the figure). The sliding slot 15 is neighbored to the corresponding connection member 10. In this embodiment, two pairs of the sliding slot 15 and the connection member 10 are shown. One pair of the sliding slot 15 and the connection member 10 is located at one lateral side of the carrier base 1, while another pair thereof is located to the opposing side of the carrier base 1. The central empty space 15 is located between the two connection members 10. Note that, in the same pair, the connection member 10 is located closer to the central empty space 16 than the sliding slot 15.

The fixation member 13 located at a further lateral side (the back side of the figure) of the carrier base 1, and connects the carrier base 1 to form a particular configuration having an L-shape cross section. The fixation member 13 has at least one nail hole 14. In this embodiment, two nail holes 14 are shown, and these two nail holes 14 are located to opposing lateral sides of the fixation member 13.

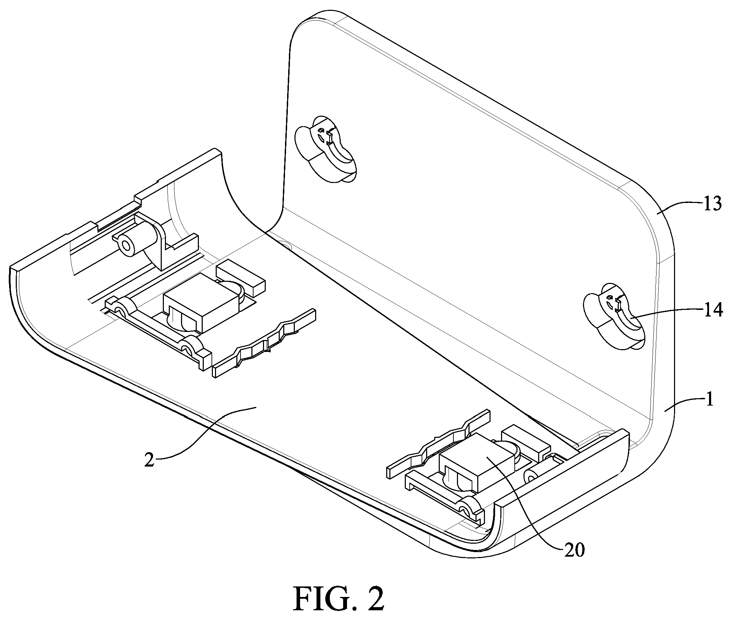

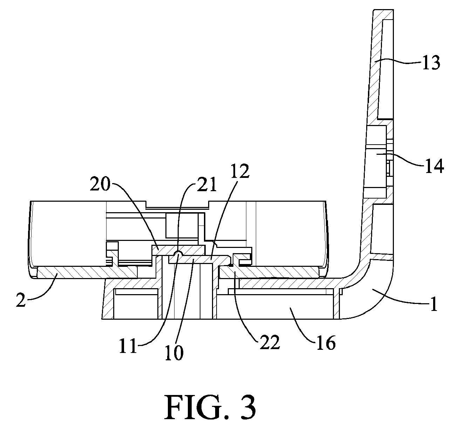

Referring now to FIG.2 and FIG.3, a casing 2 of a modem has at least one anchoring member 20 located at the bottom side thereof, and an interior wall (the bottom wall in the figure) of the anchoring member 20 has a groove 21. The groove 21 is a semispherical groove for matching the protrusive semispherical node of the spring member 11.

At least one fixation nail can be applied to penetrate the nail hole 14 so as to fix the fixation member 13 associated with the carrier base 1 to a wall. The casing 2 is engaged with the carrier base 1 in a manner of positive angling. The anchoring member 20 of the casing 2 is accounted and to, and thus engaged with, the connection member 10. The casing 2 can slide along the sliding slots 15 back and forth with respect to the fixation member 13 till the spring member 11 buckles the groove 21.

The buckling member 12 is contacted with the interior wall of the anchoring member 20 of the casing 2. By providing the buckling member 12 to contact the interior wall of the casing 2 and the spring member 11 to buckle the connection member 20, then the modem can be quickly fixed to the carrier base 1.

In the case that the modem is to separate from the carrier base 1, then firstly the casing 2 moves away the fixation member 13 so as to separate the buckling member 12 and the interior wall of the casing 2 and also to disengage the spring member 11 and the connection member 20.

If there exists connection ports for cables at the bottom of the casing 2, then the cables can connect to the connection ports via passing the central empty space 16. If the connection ports for cables are located to one side of the casing 2, then the cables can connect to the connection ports at one side of the casing 2 directly.

In the case that the incoming cables are yet to be determined, then the casing 2 can be fixed to the carrier base 1 in a manner of negative angling. Since the present invention uses the spring member 11 to buckle the groove 20 so as to engage the casing 2 and the carrier base 1, so the casing 2 can engage the carrier base 1 no matter whether the installation is in negative angling or in positive angling.

In summary, by providing the protrusive semispherical node of the spring member 11 to engage or disengage, in a buckling manner, the semispherical groove 20 of the casing 2 in accordance with the present invention, the carrier base 1 can easier engage or separate the groove 20 of the casing 2.

In the present invention, since the spring member 11 is an elastomer itself, so when the casing 2 engages or disengages the carrier base 1, the elasticity of the spring member 11 would in action to compress or extend so as to quickly engage or separate the casing 2 and the carrier base 1.

In addition, the sliding a lot 15 of the carrier base 1 can provide a guide effect for the casing 2 so as to ensure the buckling or disengaging between the spring member 11 and the groove 20.

Further, by providing the spring member 11 to buckle the groove 20 in accordance with the present invention, the casing 2 can be fixed to the carrier base 1. In this present invention, the casing 2 is fixed to the carrier base 1 in a positive-angling manner. However, when a need of another arrangement in cabling for the casing 2 is met, a negative-angling style can still be applied to buckle the spring member 11 and the groove 20 so as to ensure the engagement between the casing 2 and the carrier base 1 in a negative-angling manner.

While the present invention has been particularly shown and described with reference to a preferred embodiment, it will be understood by those skilled in the art that various changes in form and detail may be without departing from the spirit and scope of the present invention.

## Claims

1. A fixation structure, applied to fix a casing (2) of a modem, a bottom of the casing (2) further having at least one anchoring member (20), comprising:
a carrier base (1), having at least one connection member (10) at at least one corresponding end, the connection member (10) being connected with the anchoring member (20) so as to fixed the modem to the carrier base (1).

2. The fixation structure of claim 1, wherein at least one side of the carrier base (1) has a sliding slot (15) located close to the connection member (10).

3. The fixation structure of claim 1, wherein the connection member (10) has a spring member (11) and a buckling member (12), the spring member (11) being located at a top of the connection member (10), the buckling member (12) being located at one end of the connection member (10).

4. The fixation structure of claim 3, wherein an interior wall of the anchoring member (20) has a groove (21) for buckling the spring member (11).

5. The fixation structure of claim 4, wherein the spring member (11) has a protrusive semispherical node and the groove (21) is a semispherical groove for matching the protrusive semispherical node.

6. The fixation structure of claim 1, further including a fixation member (13) located at one side of the carrier base (1).

7. The fixation structure of claim 6, wherein the fixation member (13) has at least one nail hole (14) for connecting the carrier base (1) and the fixation member (13), and the connected carrier base (1) and the fixation member (13) are to have an L-shape cross section.
